# EUROPEAN PATENT APPLICATION

(11) **EP 1 591 871 A1**
(43) Date of publication of application: **02.11.2005**
(21) Application number: 04010232.9
(22) Date of filing: 29.04.2004
(51) Int. Cl.: G06F 1/20, H01L 23/427, H05K 7/20

(54) **Heat dissipating structure for computer host**

(71) Applicant: Shuttle Inc., Nei-Hu Dist., Taipei (TW)
(72) Inventor: Wu, Ching-Hsi, Nei-Hu Dist. Taipei (TW)
(74) Representative: TER MEER - STEINMEISTER & PARTNER GbR

(57) **Abstract**

A heat dissipating structure for a computer host is provided. The computer host has a casing where a mother board, a CPU with a heat dissipating device mounted thereon, and plural electrical components are located. On two side boards of the computer casing, plural ventilative openings corresponding to each other are formed. The plural ventilative openings on respective side board face the heat dissipating device. As such, the outside air is drawn into the inside casing from the ventilative openings on one side board, and the hot air inside the casing is exhausted to outside through the ventilative openings on other side board. Therefore, not only the circulation of the air convection inside the computer casing is increased, but also the heat conducted by the heat dissipating device is rapidly dissipated so that the heat dissipating efficiency of the dissipating device is significantly enhanced.

## Description

### BACKGROUND OF THE INVENTION

The present invention is related to a heat dissipating structure, and more particularly, to a heat dissipating structure for a computer host, which is able to increase the circulation of the air flowing inside the computer casing so that the heat conducted by the heat dissipating device on the CPU can be rapidly dissipated. Accordingly, the heat dissipating efficiency of the dissipating device is significantly enhanced so that the best heat dissipation is achieved.

With the fast developments in the industry of scientific technology, the working speed of the computer has been prominently accelerated. Especially when the CPU has a higher and higher operation speed, the heat generated from the CPU during its operation is greatly increased.

The conventional computer casing is mostly a rectangular body including a front, a back, a left side and a right side. There are disk drive and CD-ROM drive mounted on the front of the computer casing, while the power outlet, the connection ports for different interfaces and the heat dissipating fan are mounted at the back of the computer casing. The heat dissipating fan extracts the hot air from the inside computer casing and exhausts the hot air to the outside, or, draws the outside cold air into the computer casing so as to lower the temperature inside the computer casing. Accordingly, the heat dissipating efficiency for the CPU can be enhanced.

However, the heat dissipating in the conventional computer casing depends on single heat dissipating fan, which often diminishes the efficiency of the air convection owing to the fewer air flowing or the low-speed flowing. Therefore, the hot air inside the computer casing can not be exhausted to the outside promptly, but accumulated inside the computer casing. Accordingly, the heat dissipating efficiency for the CPU is reduced and the heat dissipating effectiveness for the CPU is seriously affected.

Hence, how to improve the heat dissipating efficiency for the CPU has become a major problem waited to be solved in the industry. In order to overcome the drawbacks in the prior art, a heat dissipating structure for a computer host capable of providing a fine air flowing, is provided.

### SUMMARY OF THE INVENTION

The present invention is to provide a heat dissipating structure for a computer host, which enhances the circulation of the air convection inside the computer casing so that the heat conducted by the heat dissipating device on the CPU can be rapidly dissipated. Hence, the heat dissipating efficiency of the dissipating device is significantly enhanced and the best heat dissipating effectiveness is achieved as well.

According to one aspect of the present invention, the features of the present invention are that the computer host machine has a casing where a mother board, a CPU with a heat dissipating device mounted thereon, and plural electrical components are located. On the side boards of the computer casing, the plural ventilative openings are mounted at positions corresponding to each other. The plural ventilative openings on the respective side boards are mounted at positions facing the heat dissipating device. As such, the outside flowing wind is drawn into the inside casing from the ventilative openings on one side board, and the hot air inside the casing is exhausted to the outside through the ventilative openings on other side board. Therefore, not only the circulation efficiency of the air convection inside the computer casing is increased, but also the heat conducted by the heat dissipating device is rapidly dissipated so that the heat dissipating efficiency of the dissipating device is significantly enhanced.

According to another aspect of the present invention, the feature of the present invention is that the heat dissipating device includes two adjacent heat dissipating fin modules, a first heat dissipating fin module and a second heat dissipating fin module. Further, there are a first and a second heat dissipating fans respectively mounted on the two external surfaces of the two heat dissipating fin modules, rather than the two inside surfaces between the two adjacent heat dissipating fin modules. The blades of the first heat dissipating fan and the second heat dissipating fan have the same rotary directions. As such, via the first heat dissipating fan, the outside air is extracted inside from the ventilative openings on one side board and blown to an area around two adjacent heat dissipating fin modules. Then, via the second heat dissipating fan, the heat conducted to the two adjacent heat dissipating fin modules is exhausted outside through the ventilative openings on other side board of the casing. Through the extraction and exhausting movements of the two heat dissipating fans, the air flowing inside the heat dissipating device is rapidly accelerated and therefore the heat dissipating efficiency is significantly enhanced.

The foregoing and other features and advantages of the present invention will be more clearly understood through the following descriptions with reference to the drawings, wherein:

### BRIEF DESCRIPTION OF THE DRAWINGS

Fig. 1 is a schematic diagram showing the structure of the computer casing, the mother board, and the heat dissipating device according to a preferred embodiment of the present invention;
Fig. 2 is a perspective view showing the outside appearance of the computer casing before assembling the left and right side boards according to a preferred embodiment of the present invention;
Fig. 3 is a perspective view showing the outside appearance of the computer casing according to a preferred embodiment of the present invention; and
Fig. 4 is a sectional view showing the air flowing inside the computer casing achieved by the heat dissipating device according to a preferred embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only; it is not intended to be exhaustive or to be limited to the precise form disclosed.

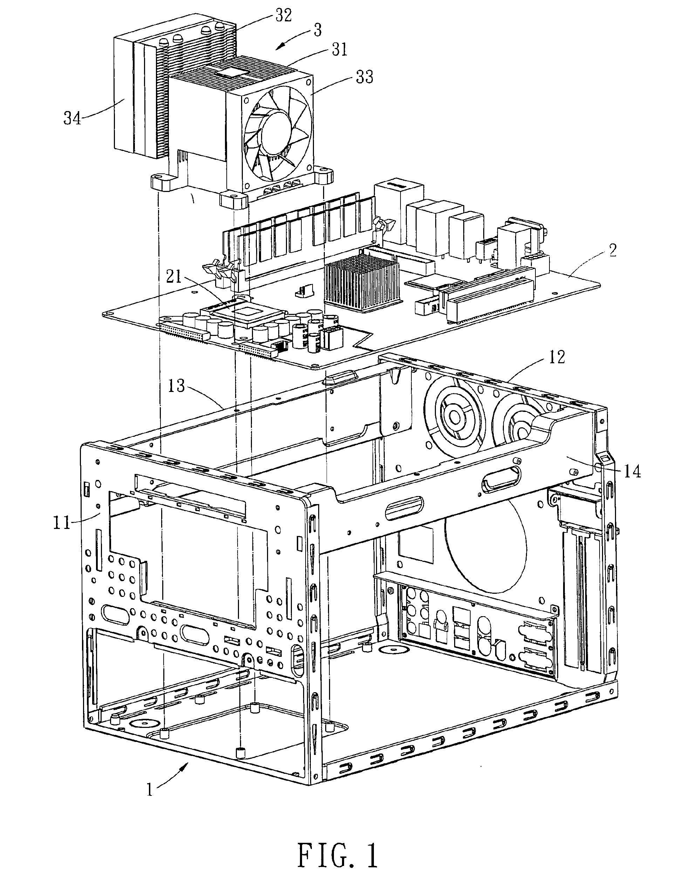

A heat dissipating structure for a computer host is provided in the present invention. Please refer to Fig. 1. The computer host machine 10 includes the computer casing 1 which is generally a rectangular body. The computer casing 1 is defined as having a front 11, a back 12, a left side 13 and a right side 14. The distance between the front 11 and the back 12 is lengthier than that between the left side 13 and the right side 14. There are devices like disk cartridge and CD-ROM drive mounted at the front 11 of the computer casing 1. And there are elements like power socket and connection ports for different interfaces mounted at the back 12. There is the mother board 2 mounted inside the computer casing 1. The CPU 21 and the electrical elements or devices 22 are positioned on the mother board 2. Also, the heat dissipating device 3 is positioned on the CPU 21.

According to a preferred embodiment of the present invention, the heat dissipating device 3 on the CPU 21 includes two adjacent heat dissipating fin modules, the first heat dissipating fin module 31 and the second heat dissipating fin module 32. Further, there are the first heat dissipating fan 33 and the second heat dissipating fan 34 respectively mounted on the two external surfaces of the two heat dissipating fin modules 31 and 32, rather than the two inside surfaces between the two adjacent heat dissipating fin modules 31 and 32. The blades of the first heat dissipating fan 33 and the second heat dissipating fan 34 have the same rotary directions. Certainly, according to a preferred embodiment of the present invention, implementing a single one heat dissipating fin modules 31 (or 32) and a single one heat dissipating fan 33 (or 34) is workable as well.

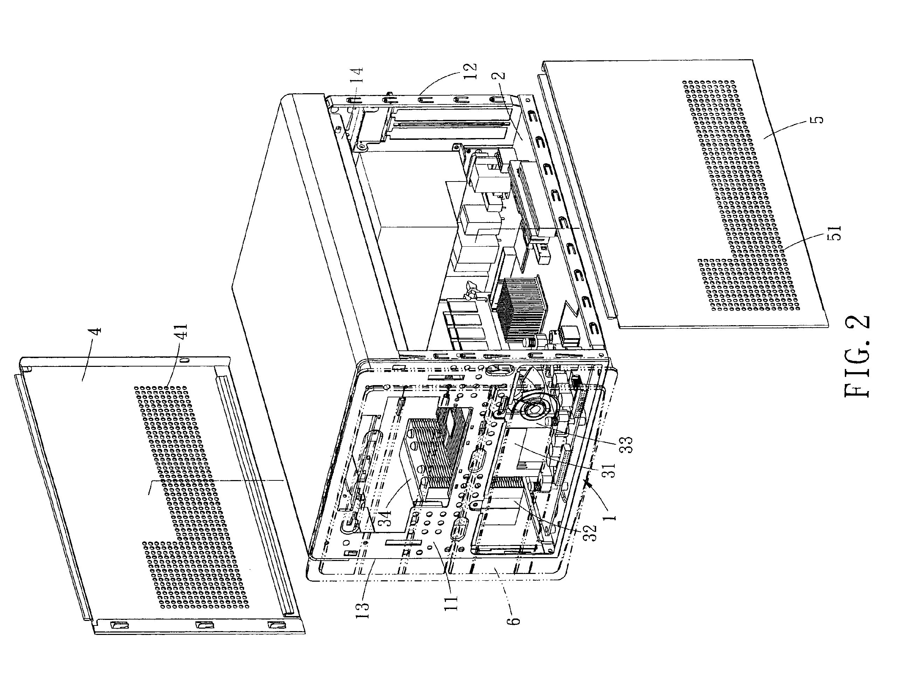

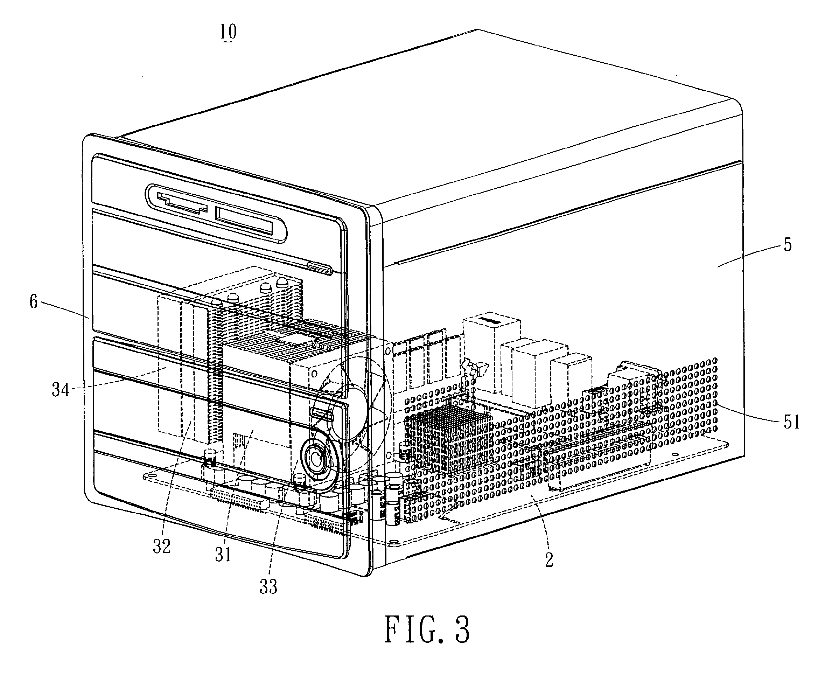

Please refer to Figs. 2-3. The left side 13 and the right side 14 of the computer casing 1 respectively have a left side board 4 and a right side board 5. Certainly, there are front board 6 and back board (not shown) respectively mounted at the front 11 and the back 12 of the computer casing 1. On the left side board 4 and the right side board 5, the plural ventilative openings 41 and 51 are respectively opened at positions corresponding to each other. In addition, the plural ventilative openings 41 and 51 on the respective left side board 4 and right side board 5 are opened at positions facing the heat dissipating device 3.

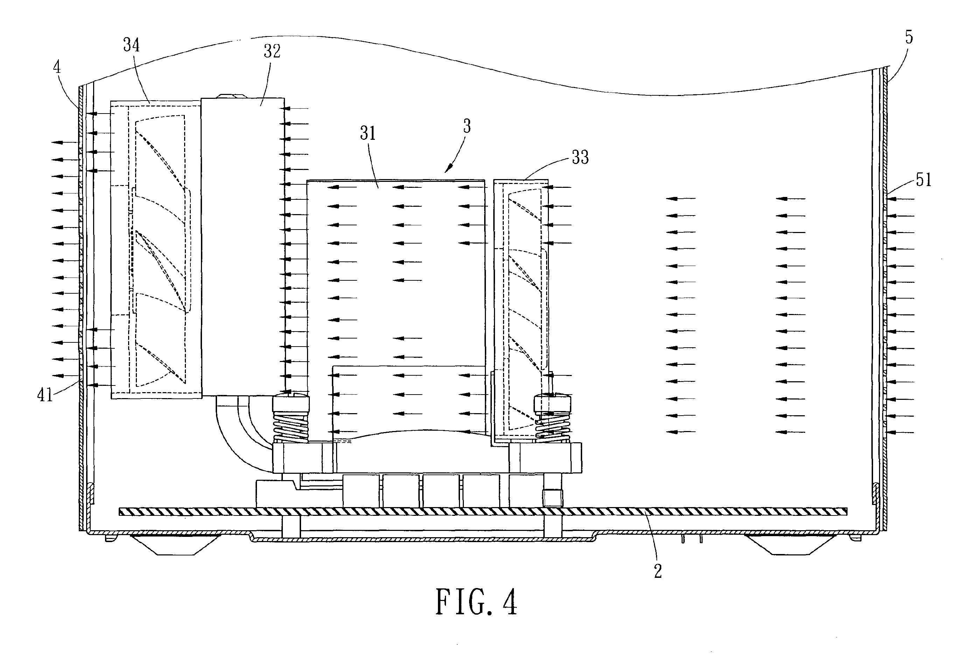

Please refer Fig. 4. After the computer host machine 10 starts to operate, the heat dissipating device 3 will start to dissipate the heat for CPU 21. Accordingly, the outside wind is drawn inside the computer casing 1 from the ventilative openings 51 on the right side board 5. Plus the extracting driven by the first heat dissipating fan 33, the outside wind is blown inside the computer casing 1 rapidly and blown to an area around two adjacent heat dissipating fin modules 31 and 32 for dissipating the generated heat. Meanwhile, via the second heat dissipating fan 34, the heat conducted to the two adjacent heat dissipating fin modules 31 and 32 is exhausted outside through the ventilative openings 41 on the left side board 4 of the computer casing 1. Hence, the generated heat will not accumulate inside the computer casing 1.

In this embodiment, since the outside wind is extracted inside the computer casing 1 from the ventilative openings 51 on one side board 5 and the hot air is exhausted outside through the ventilative openings 41 on the other side board 4, plus the distance between the left side board 4 and right side board 5 is shorter, the circulation efficiency of the air convection inside the computer casing 1 is enhanced. The heat conducted by the heat dissipating device 3 is rapidly dissipated. Hence, the heat dissipating efficiency of the dissipating device 3 is significantly enhanced and the best heat dissipating effectiveness is achieved as well. Accordingly, the present invention not only has a novelty and a progressive nature, but also has an industry utility.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A heat dissipating structure for a computer host, comprising:
a casing having a front side, a back side, a left side and a right side;
a mother board having a CPU, plural electrical components mounted thereon;
a heat dissipating device mounted on the CPU for dissipating heat generated therefrom,
wherein the left side and the right side respectively have a left side board and a right side board for opening thereon plural ventilative openings corresponding to each other, and the plural ventilative openings on respective left side board and right side board are opened at positions facing the heat dissipating device.

2. The heat dissipating structure for a computer host according to claim 1, wherein the heat dissipating device comprises a first heat dissipating fin module and a second heat dissipating fin module which are adjacent to each other.

3. The heat dissipating structure for a computer host according to claim 2, wherein two outside surfaces of the first heat dissipating fin module and the second heat dissipating fin module have a first heat dissipating fan and a second heat dissipating fan mounted thereon respectively.

4. The heat dissipating structure for a computer host according to claim 3, wherein the first heat dissipating fan and the second heat dissipating fan are rotated at the same direction.
